# EUROPÄISCHE PATENTANMELDUNG

(11) **EP 1 541 995 A1**
(43) Veröffentlichungstag der Anmeldung: **15.06.2005**
(21) Anmeldenummer: 04028818.5
(22) Anmeldetag: 06.12.2004
(51) Int. Cl.: G01N 21/85, G01N 21/03, B07C 5/342, G01N 3/56, G01N 1/28

(54) **Verfahren und Vorrichtung zur qualitätsbestimmung granulatförmigen Materials**

(30) Priorität: 12.12.2003 DE 10358135
(71) Anmelder: L.B. BOHLE PHARMATECHNIK GmbH, D-59320 Ennigerloh (DE)
(72) Erfinder: Bohle, Armin, 59302 Oelde (DE); Pelz, Peter, 59320 Ennigerloh (DE)
(74) Vertreter: Habbel, Hans-Georg, Dipl.-Ing.

(57) **Zusammenfassung**

Bei einem Verfahren zur Qualitätsbestimmung eines granulatförmig vorliegenden Materials mittels eines optischen Sensors, wobei eine Materialprobe während eines in einer Prozesskammer ablaufenden Herstellungs- oder Behandlungsprozesses aus dem Prozess entnommen, in eine Probenkammer verbracht und vor ein Fenster geführt wird, durch welches der Sensor die Materialprobe erfasst, wobei die Materialprobe während der optosensorischen Qualitätsbestimmung innerhalb der Prozesskammer verbleibt und nachher in den Prozess zurückgeführt wird, schlägt die Anmeldung vor, dass die Materialprobe innerhalb der Probenkammer vor Durchführung der Qualitätsbestimmung verdichtet wird.

## Beschreibung

Die Erfindung betrifft ein Verfahren und eine Vorrichtung nach dem Oberbegriff des Anspruchs 1 bzw. des Anspruchs 10.

Ein derartiges Verfahren und eine derartige Vorrichtung sind aus der DE 196 45 923 A1 bekannt.

Mittels einer Infrarot-Nahfeld-Messung beispielsweise kann eine optische Qualitätsbestimmung von Granulat erfolgen. Als Granulat wird im Sinne des vorliegenden Vorschlags ein aus Einzelkörpern bestehendes, schütt- oder rieselfähiges Material bezeichnet, unabhängig von der Größe der Einzelkörper, so dass auch Pulver oder Puder in diesem Zusammenhang als Granulat bezeichnet werden. Aus dem gattungsbildenden Verfahren sowie aus der gattungsbildenden Vorrichtung ist es bekannt, die Probenmenge nicht aus der Prozesskammer zu entfernen und nach der Qualitätsbestimmung zu verwerfen, sondern die Qualitätsbestimmung innerhalb der Prozesskammer durchzuführen und zwar in der innerhalb der Prozesskammer angeordneten eigentlichen Probenkammer. Die Probenkammer ist hierzu nach oben offen, sodass durch die Bewegung des Materials während des Prozesses, beispielsweise im Rahmen einer Wirbelschicht-Granulation automatisch das Material in die Probenkammer gelangt, dem Fenster des optischen Sensors anliegt und anschließend auf seine Qualität untersucht werden kann.

Aus den unterschiedlichen-Korngrößen- und Feuchtigkeitsverhälnissen ergibt sich eine Beeinflussung der Schütt- bzw. Rieselfähigkeit des Granulats, sodass das zu untersuchende Material dem Fenster des optischen Sensors auf unterschiedliche Weise anliegen kann, was wiederum zur Beeinflussung der Messergebnisse und dementsprechend zu Messungenauigkeiten führen kann.

Auch ist es bekannt, Infrarotmessungen eines Mahlgutes im Verlauf der Förderung desselben durchzuführen, indem an die den Hauptproduktstrom führende Hauptleitung eine Bypassleitung anschließt, in der die Messung vorgenommen wird. Bei einer solchen Vorrichtung erfolgt also die Probennahme nicht während eines in einer Prozeßkammer ablaufenden Herstellungs- oder Behandlungsprozesses, sondern es wird ein Förderstrom untersucht, wobei der Förderstrom geteilt wird und in dem Teilstrom nunmehr eine Probe analysiert wird. Eine solche Anordnung ist nicht nur platzaufwendig, sondern auch kostenaufwendig und eignet sich beispielsweise nicht, um im Rahmen einer Wirbelschichtgranulation Probenuntersuchungen durchzuführen.

Der Erfindung liegt die Aufgabe zugrunde, ein gattungsgemäßes Verfahren dahingehend zu verbessern, dass eine hohe Messgenauigkeit und Wiederholgenauigkeit der Messungen ermöglicht wird, und eine dazu geeignete Vorrichtung anzugeben.

Diese Aufgabe wird durch ein Verfahren mit den Verfahrensschritten des Anspruchs 1 sowie durch eine Vorrichtung mit den Merkmalen des Anspruchs 9 gelöst.

Die Erfindung schlägt mit anderen Worten vor, die Materialprobe nicht als lockere Schüttung zu belassen, sondern zu pressen, was nachfolgend als "verdichten" bezeichnet wird. Wenn die Materialprobe druck- oder wegabhängig stets gleich verdichtet wird, können zufällige, unterschiedliche Schüttungen der Materialprobe innerhalb der Probenkammer vermieden werden, welche ansonsten eventuell die Meßergebnisse beeinflussen könnten.

Vorteilhaft kann vorgesehen sein, die Materialprobe an das Fenster des optischen Sensors anzudrücken, um so eine optimale und stets gleiche Entfernung der Materialprobe vom Fenster des optischen Sensors sicherzustellen und auf diese Weise aussagekräftige Messergebnisse mit hoher Wiederholgenauigkeit und Messgenauigkeit zu ermöglichen. Selbst wenn ein derartiges Andrücken der Materialprobe an das Fenster keine tatsächliche "Verdichtung" in Form einer Erhöhung des spezifischen Raumgewichtes der Materialprobe bewirken sollte, bewirkt dieses im Rahmen des vorliegenden Vorschlags als "Verdichten" bezeichnete Andrücken, dass zufällige, unterschiedliche Abstände der Materialprobe zum optischen Sensor vermieden werden.

Die Verdichtung bei gleichzeitiger Anlage der Materialprobe an das Fenster kann auf zwei unterschiedliche Arten erfolgen: Einerseits kann die Probenkammer die Materialprobe an das Fenster des optischen Sensors führen, indem die Probenkammer verformbar ist und / oder beweglich gelagert ist, andererseits kann der optische Sensor beweglich ausgestaltet sein und in die Materialprobe gedrückt werden, welche sich in der Probenkammer befindet, sodass in diesem zweiten Fall die Verdichtung möglicherweise lokal eng begrenzt auf den Bereich vor dem Fenster des optischen Sensors. In beiden Fällen wird durch den Kontakt zwischen Materialprobe und Fenster ein definierter Abstand der optisch untersuchten Materialprobe zu dem Fenster geschaffen, nämlich vorschlagsgemäß ein "Null-Abstand", so daß durch diesen definierten Abstand zufällige Einflüsse vermieden werden, wie sie durch zufällig unterschiedliche Abstände der Körner einer Materialschüttung von dem Fenster ansonsten entstehen könnten.

Als "optischer Sensor" werden im Rahmen des vorliegenden Vorschlags verallgemeinernd die Elemente einschließlich des Fensters bezeichnet, welche die optische Auswertung der Materialprobe ermöglichen, also auch Lichtleiter, Zwischenstücke und dergleichen sowie das Fenster selbst, welches ggf. die Lichtaustrittsfläche für eine Beleuchtung und jedenfalls die Lichteintrittsfläche für die auszuwertenden optischen Signale bildet, wobei das eigentliche Sensor-Organ, eventuell als Zelle oder als Chip ausgebildet, möglicherweise weiter entfernt angeordnet ist. Für den vorliegenden Vorschlag ist es jedoch nicht in erster Linie wichtig, wo der komplette Sensor und das eigentliche Sensor-Organ angeordnet ist, sondern vielmehr wo sich das Fenster befindet, dem das Material anliegt, wenn die optische Qualitätsbestimmung durchgeführt wird.

Die gattungsgemäße DE 196 45 923 A1 führt als einen bedeutenden Nachteil an, dass eine optische Qualitätsbestimmung durch ein Fenster in der Behälterwand erfolgt. Gemäß dem vorliegenden Vorschlag kann jedoch eine derartige Messung mit guten Messergebnissen erfolgen. Vorteilhaft kann zudem eine Abreinigung des Fensters vorgesehen sein. Mit besonders geringem konstruktiven Aufwand kann dabei vorgesehen sein, die Probenkammer selbst das Fenster abreinigen zu lassen.

Die Probenkammer kann beispielsweise schalenartig ausgestaltet sein, der Wand der Prozesskammer innen anliegen, und sowohl nach oben als auch zur Wand der Prozesskammer hin offen sein. Ein den Proben-Hohlraum begrenzender Wandungsabschnitt der gesamten Probenkammer wird also durch die Wand der Prozesskammer selbst gebildet, indem die übrige, schalenartige Probenkammer der Prozesskammer-Wandung dicht anliegt. Ein zufälliger Materialanteil aus dem Prozess, beispielsweise aus der Wirbelschicht-Granulation, fällt in die nach oben offene Probenkammer. Obwohl sich diese Materialmenge nach wie vor innerhalb der Prozesskammer befindet, ist sie nun aus dem Prozess herausgenommen, da sie nicht mehr verwirbelt wird. Diese schalenartige Probenkammer kann später von der Prozesskammer-Wandung weiter beabstandet werden, oder sie kann entlang der Prozesskammer-Wandung bewegt werden, beispielsweise rotatorisch bewegt werden, sodass die zunächst nach oben gerichtete Öffnung nach unten verschwenkt wird. In beiden Fällen wird auf diese Weise die Probenkammer entleert, indem rein schwerkraftbedingt die Materialprobe aus der Probenkammer fällt bzw. herausrieselt.

Gegebenenfalls kann die rein schwerkraftbedingte Entleerung der Probenkammer durch einen Spülvorgang unterstützt werden, beispielsweise eine Spülung mit einer Flüssigkeit oder einem Gas, wobei insbesondere vorteilhaft ein prozessneutrales Fluid verwendet werden kann, sodass die Spülung beliebig oft wiederholt werden kann, ohne den in der Prozesskammer ablaufenden Prozess zu beeinflussen.

Bei der vorerwähnten rotatorischen Bewegung der Probenkammer streift die Wand der schalenartigen Probenkammer mit ihrer Randkante an der Innenwand der Prozesskammer entlang und reinigt dabei das Fenster des optischen Sensors, der in die Wand der Prozesskammer eingelassen ist. Hierzu kann ein entsprechendes Reinigungselement an der Probenkammer vorgesehen sein, beispielsweise in Form einer Bürste oder in Form einer Elastomerlippe, um besonders gute Reinigungsergebnisse zu erzielen.

Besonders vorteilhaft kann die Randkante der Probenkammer, welche an dem Fenster vorbeigeführt wird, selbst als ein derartiges Reinigungselement ausgestaltet sein, beispielsweise in Form einer Bürste oder in Form einer Elastomerlippe. Auf diese Weise werden Anbauteile - wie etwa ein spezielles Reinigungselement - an der Probekammer überflüssig, so dass demzufolge auch sich daraus eventuell ergebende hygienische Nachteile durch z. B. schlecht zu reinigende Hohlräume, Spalten oder dergleichen vermieden werden können.

Vorteilhaft kann die Randkante der Probenkammer zu einem großen Teil oder insgesamt flexibel ausgebildet sein. So ermöglicht sie durch ihre Verformbarkeit zusätzlich zu der Reinigungswirkung auch, dass die Probenkammer durch eine Linear- oder durch eine Kippbewegung an die Wandung der Prozesskammer herangepresst werden kann, um auf diese Weise die Verdichtung der Materialprobe zu ermöglichen, sodass das Material an das in dieser Wandung vorgesehene Fenster des optischen Sensors gepresst wird. Zu diesem Zweck kann beispielsweise die Rotationsachse, um welche die schalenartige Probenkammer verschwenkt oder gedreht werden kann, gleichzeitig auch translatorisch beweglich sein in Form einer Schub- bzw. Zugstange, um auf diese Weise die Verdichtung zu ermöglichen. Diese translatorische Bewegung kann zudem die Entleerung der Probenkammer unterstützen, indem die Probenkammer von der Wand der Prozesskammer entfernt und somit geöffnet wird.

Alternativ zu einer derart verformbar ausgestalteten Kante der Probenkammer kann vorgesehen sein, die gesamte Probenkammer aus elastisch verformbarem Material, beispielsweise einem Elastomerwerkstoff, auszugestalten und ansonsten ähnlich der vorerwähnten Vorgehensweise an die Wandung der Prozesskammer anzupressen, wobei sich die Probenkammer verformt und die in der Probenkammer enthaltene Materialprobe verdichtet wird, sodass das Material optimal am Fenster des optischen Sensors anliegt.

Alternativ dazu kann vorgesehen sein, den optischen Sensor, der in die Wand der Prozesskammer eingelassen ist, in einem hin und her beweglichen Kolben oder Stößel zu lagern. Wenn die mit der Materialprobe gefüllte Probenkammer vor dem Fenster angeordnet ist, kann der Stößel aus der Wand aüsgefahren werden, sodass er in die Prozesskammer eindringt und dort das Material verdichtet, sodass dies optimal am Fenster des optischen Sensors anliegt und eine zuverlässige Messung ermöglicht.

Alternativ zu der vorgenannten schalenartigen Ausgestaltung der Probenkammer kann diese ähnlich wie eine sehr kurze Förderschnecke ausgestaltet sein, also einen sich keilförmig verjüngenden Aufnahmeraum aufweisen, der durch die Wandung der Prozesskammer begrenzt wird und der sich entgegen der Bewegungsrichtung der Probenkammer verjüngt. Durch die Bewegung der Probenkammer wird das in dem keilförmigen Raum vorhandene Material automatisch verdichtet, so daß es mit einem bestimmten Anlagedruck dem Fenster anliegt, wenn die optische Qualtitäsbestimmung durch dieses Fenster hindurch erfolgt.

Insbesondere wenn die Beweglichkeit dieser Probenkammer als Drehbewegung ausgestaltet ist, erfolgt automatisch eine selbsttätige Entleerung, wenn die Probenkammer nach unten geöffnet ist und die Materialprobe schwerkraftbedingt aus der Probenkammer herausfällt. Zusätzliche bewegliche Bauteile - wie etwa ein Verschlußdeckel für die Probenkammer- können daher entfallen, was sowohl die Herstellungskosten als auch die hygienischen Eigenschaften der Vorrichtung positiv beeinflusst. Eine flexible Ausgestaltung der Randkante oder der gesamten Wandung der Probenkammer kann es ermöglichen, die Probenkammer in einer zweiten Bewegungsrichtung an die Wandung der Prozesskammer heranzuziehen und so eine Verdichtung der Materialprobe zu ermöglichen.

Es kann eine flexible Kante an der Probenkammer vorgesehen sein, welche den Hohlraum begrenzt, in dem die Materialprobe aufgenommen wird, so daß diese flexible Kante als Dichtung wirkt, die ein unerwünschtes Entweichen der Materialprobe aus der Probenkammer zu den Seiten der Probenkammer verhindert. Zudem kann diese flexible Kante auch bei ansonsten starrer Ausbildung der Probenkammer eine Verdichtung der Materialprobe durch die erwähnte zweite Bewegungsrichtung ermöglichen und die Reinigungswirkung verbessern, wenn die Probenkammer über das Fenster des optischen Sensors geführt wird.

Ausführungsbeispiele der Erfindung werden nachfolgend anhand der rein schematischen Zeichnungen näher erläutert. Dabei zeigt
- Fig. 1: einen Querschnitt durch eine Prozesskammer, mit einer darin angeordneten, in einer ersten Stellung befindlichen Probenkammer,
- Fig. 2: eine Ansicht ähnlich Fig. 1, wobei sich die Probenkammer in einer zweiten Stellung befindet,
- Fig. 3 - 6: einen perspektivischen Anblick in das Innere der Prozesskammer der Fig. 1 und 2, wobei sich die Probenkammer in unterschiedlichen Stellungen befindet,
- Fig. 7: eine perspektivische Ansicht in eine Prozesskammer, mit einem zweiten Ausführungsbeispiel einer Probenkammer und
- Fig. 8-10: die Probenkammer der Fig. 7 in verschiedenen Stellungen.

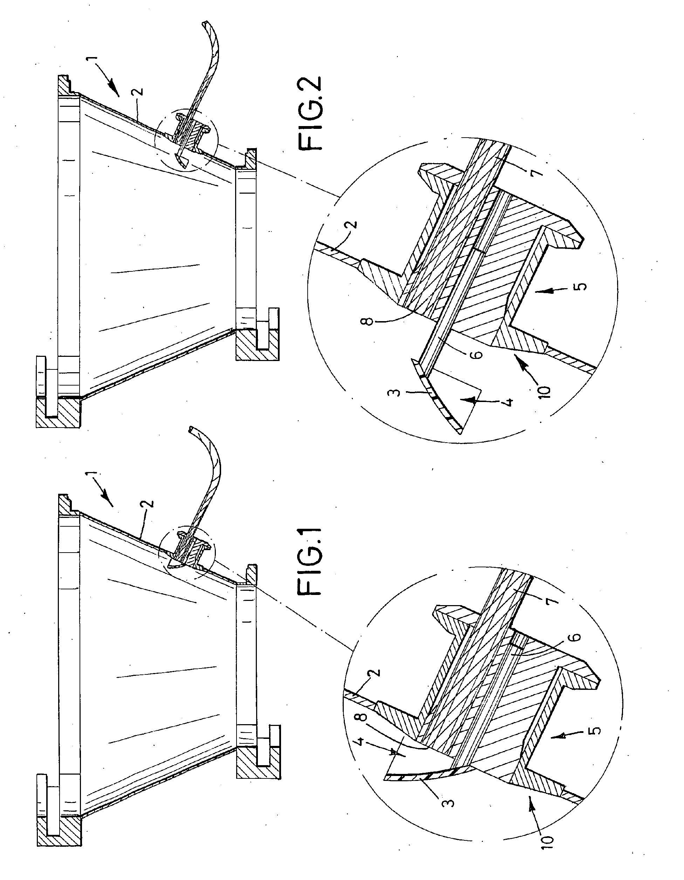

In Fig. 1 ist mit 1 eine Prozesskammer bezeichnet, beispielsweise ein Produktbehälter für eine Wirbelschichtgranulation. Diese Prozesskammer 1 weist eine kegelstumpfförmig konisch verlaufende Wandung 2 auf. Im Inneren der Prozesskammer 1 ist eine Probenkammer 3 vorgesehen, die schalenartig ausgestaltet ist und einen Proben-Hohlraum 4 begrenzt, der auch durch die Wandung 2 begrenzt wird. Die Probenkammer 3 ist in ihrer in Fig. 1 dargestellten Stellung nach oben offen, so daß Granulat, welches in der Prozesskammer 1 hergestellt bzw. bearbeitet wird, automatisch in die Probenkammer 3 gelangt und den Probenhohlraum 4 füllt. Obwohl diese Materialprobe sich nach wie vor in der Prozesskammer 1 befindet, ist sie doch aus dem Prozess herausgenommen, da sie beispielsweise an den Verwirbelungsvorgängen nicht mehr teilnimmt.

Die in Fig. 1 ersichtliche Detaildarstellung, die den Bereich um die Probenkammer 3 betrifft, zeigt einen hülsenförmigen Einsatz 5, so daß unmittelbar um die Probenkammer 3 herum dieser Einsatz 5 bereichsweise die Wandung 2 bildet, die als Konusfläche 10 ausgebildet ist. In dem Einsatz 5 ist eine Führungsstange 6 beweglich geführt, so daß die Probenkammer 3 mit Hilfe dieser Führungsstange 6 drehbeweglich antreibbar ist. Die Führungsstange 6 ist nicht nur als Drehantrieb für die schalenartig ausgestaltete Probenkammer 3 vorgesehen, sondern sie ist auch axial verstellbar.

Weiterhin ist durch den Einsatz 5 ein optischer Leiter 7 geführt, der bündig mit dem Einsatz 5, also dem durch den Einsatz 5 gebildeten Teil der Wandung 2, abschließt. Diese an die Prozesskammer 1 bzw. an die Probenkammer 3 grenzende Stirnfläche des optischen Leiters 7 wird als Fenster 8 bezeichnet, wobei abweichend von dem dargestellten Ausführungsbeispiel das Fenster 8 auch durch ein separates Bauteil gebildet werden kann, welches den optischen Leiter 7 von der Prozesskammer bzw. von dem Probenhohlraum 4 trennt. Sowohl die Lichtquelle als auch der die Lichtsignale auswertende Teil des optischen Sensors sind von der eigentlichen Prozesskammer 1 entfernt angeordnet, so daß der optische Leiter 7 als Teil des gesamten optischen Sensors die erforderliche Nähe zur Materialprobe ermöglicht.

Fig. 2 zeigt die Vorrichtung von Fig. 1 in einer Entleerungsstellung: Mit Hilfe der Führungsstange 6 ist die Probenkammer 3 gegenüber der in Fig. 1 dargestellten Anordnung um 180° verschwenkt und von der Wandung entfernt worden, also nach unten offen, so daß sie in dieser Stellung geleert wird und die Materialprobe aus dem Probenhohlraum 4 herausfällt. Anschließend an die in Fig. 2 dargestellte Ausrichtung wird die Probenkammer 3 wiederum um 180° verschwenkt, so daß sie ähnlich wie in Fig. 1 nach oben offen ist. Wenn anschließend die Führungsstange 6 die Probenkammer 3 in dieser nach oben offenen Ausrichtung langsam an die Wandung 2 heranführt, erfolgt kurz vor dem Kontakt der Probenkammer 3 mit der Wandung 2 eine Verdichtung des im Proben-Hohlraum 4 mittlerweile gesammelten Materials, so daß dieses mit einer bestimmten Anpreßkraft dem Fenster 8 anliegt. Unregelmäßige Abstände der Materialprobe vor dem Fenster 8 sind auf diese Weise ausgeschlossen, so daß aussagekräftige und vergleichbare Meßergebnisse bei der optischen Qualitätskontrolle erzielbar sind.

Der Rand der Probenkammer 3, welcher der Wandung 2 in Form des Einsatzes 5 anliegt, ist vorzugsweise elastisch verformbar, oder das gesamte Material der schalenartigen Probenkammer 3 ist elastisch verformbar. Auf diese Weise kann eine besonders zuverlässige Verdichtung der Materialprobe bewirkt werden: Wenn durch entsprechende axiale Bewegung der Führungsstange 6 die Probenkammer 1 an der Wandung 2 anliegt und Material im Probenhohlraum 4 gesammelt ist, kann die anschließende weitere Bewegung der Führungsstange 6 eine Verformung dieser elastischen Dichtlippe bzw. der gesamten elastischen Probenkammer 3 bewirken, so daß eine Verdichtung des im Probenhohlraum 4 befindlichen Materials erfolgt. Dabei kann entweder vorgesehen sein, die Führungsstange 1 bis zu einem gewissen Widerstandsdruck zu bewegen, oder es kann vorgesehen sein, die Führungsstange 6 um eine stets gleiche Weglänge zu bewegen. Durch die druck- oder wegabhängig stets gleiche Art der Verdichtung sind vergleichbare, aussagekräftige Meßergebnisse bei der Qualitätsbestimmung erzielbar.

Die elastisch verformbare Wand der Probenkammer 3 bewirkt auch, daß bei der Schwenk- oder Drehbewegung der Führungsstange 6 und damit der Probenkammer 3 diese elastische Wand über das Fenster 8 wischt und dieses damit automatisch reinigt. Dieser Reinigungseffekt wird noch durch die Konusfläche 10 unterstützt, da hierdurch ein kleiner Freiraum geschaffen wird, durch den das Gut nach unten hin abfallen kann.

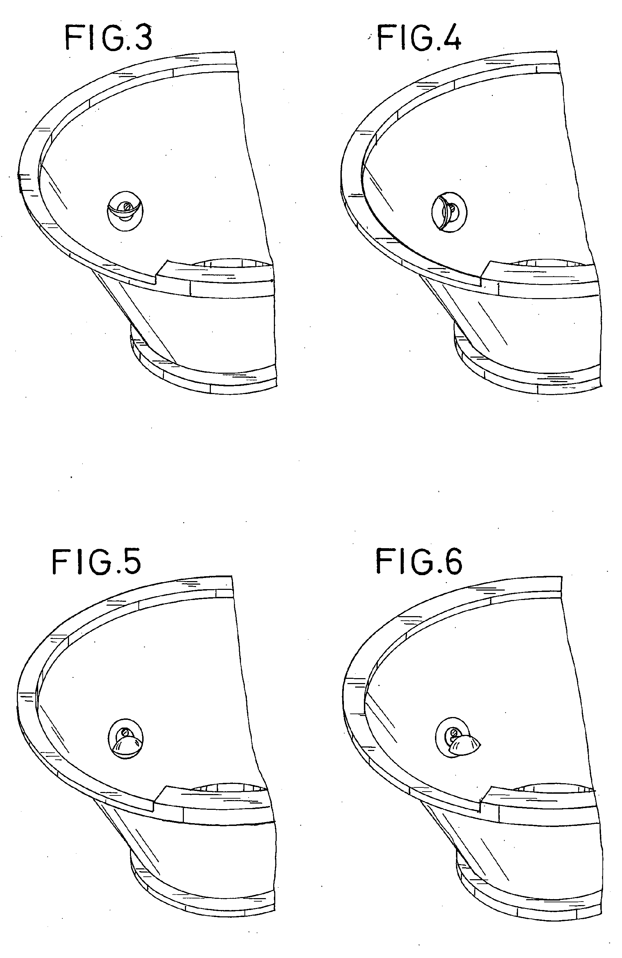

Fig. 3 zeigt die Situation von Fig. 1 in einer perspektivischen, in das Innere der Prozeßkammer 1 gerichteten Ansicht.

Fig. 4 zeigt eine demgegenüber um 90° verschwenkte Probenkammer 3. Dabei wird deutlich, daß der Rand der Probenkammer 3 über das Fenster 8 streift und dieses dabei reinigt.

Fig. 5 zeigt die nach unten offene, gegenüber den Fig. 1 oder 3 um 180° verschwenkte Probenkammer 3, und Fig. 6 zeigt die zusätzlich von der Wandung 2 beabstandete Anordnung der Probenkammer 3, wie in Fig. 2 dargestellt.

Durch die axiale Beweglichkeit der Führungsstange 6 wird einerseits eine vollständige Entleerung der Probenkammer 3 begünstigt und andererseits die Verdichtung der Materialprobe, die sich in der Probenkammer 3 befindet, ermöglicht.

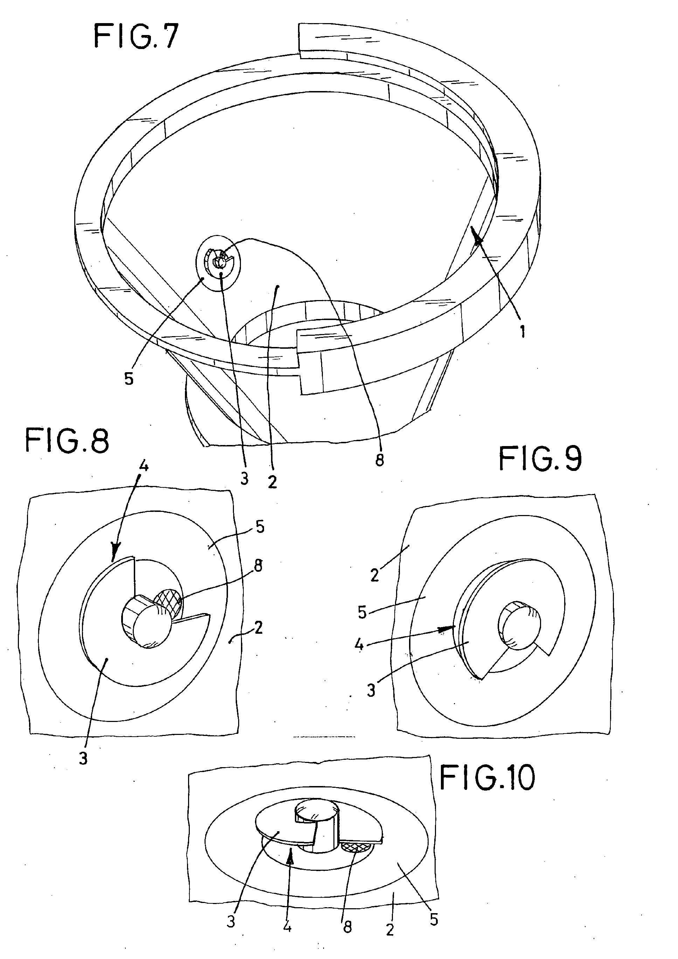

Fig. 7 zeigt eine perspektivische Ansicht ähnlich den Fig. 3 bis 6, wobei in der Prozesskammer 1 jedoch ein zweites Ausführungsbeispiel einer Probenkammer 3 vorgesehen ist: Wie aus den Fig. 8 bis 10 deutlicher in größerem Maßstab ersichtlich ist, handelt es sich bei dieser Probenkammer 3 um eine etwa schneckenförmige Ausgestaltung, so daß ein keilförmig und gebogen verlaufender Proben-Hohlraum 4 geschaffen wird, welcher sich entgegen der Bewegungsrichtung der Probenkammer 3 verjüngt. Die Bewegung der Probenkammer 3 erfolgt in einer Blickrichtung entsprechend den Fig. 7 bis 9 entgegen dem Uhrzeigersinn, so daß zunächst in den Probenhohlraum 4 gelangtes Material immer tiefer in den immer kleiner werdenden Probenhohlraum 4 gepreßt wird und auf diese Weise verdichtet wird.

Zusätzlich zu diesem Effekt kann durch eine verformbare Ausgestaltung der Probenkammer 3 sowie durch eine axiale Beweglichkeit einer diese Probenkammer 3 antreibenden Führungsstange ein zusätzlicher Verdichtungseffekt bewirkt werden, ähnlich wie bei dem vorgenannten ersten Ausführungsbeispiel beschrieben.

Die Probenkammer 3 dieses zweiten Ausführungsbeispieles ist vorzugsweise in zwei Bewegungsrichtungen beweglich: Entweder hin und her rotatorisch, so daß durch eine Bewegung im Uhrzeigersinn die Entleerung der Probenkammer durch eine Art Abstreifeffekt zusätzlich dazu unterstützt wird, daß die Probenkammer durch entsprechende Verdrehung nach unten geöffnet werden kann. Alternativ zu diesen beiden gegenläufigen Bewegungsrichtungen - oder auch zusätzlich dazu - kann die vorerwähnte axiale Beweglichkeit einer Führungsstange vorgesehen sein, so daß der Abstand zwischen der Probenkammer 3 und der Wandung 2 veränderlich ist. Hierdurch kann sowohl der Verdichtungs- als auch der Entleerungsvorgang erleichtert bzw. verbessert werden.

Wie insbesondere aus Fig. 10 ersichtlich ist, ist der Teil der Probenkammer 3, welcher der Wandung 2 - die auch bei diesem Ausführungsbeispiel bereichsweise durch den Einsatz 5 gebildet wird - am nächsten ist, für eine mechanische Abreinigung des Fensters 8 geeignet, da die Probenkammer 3 bei ihrer Bewegung das Fenster 8 überstreicht.

Weiterhin ist aus Fig. 10 ersichtlich, daß keine am Umfang der Probenkammer 3 verlaufende Wandung vorgesehen ist, welche die Probenkammer 3 gegenüber der Wandung 2 abdichten würde. Abweichend von diesem dargestellten Ausführungsbeispiel kann eine derartige Wandung jedoch vorgesehen sein. Ebenfalls kann vorgesehen sein, diese Wandung der Probenkammer 3 oder auch die gesamte Probenkammer 3 elastisch auszugestalten, so daß durch die unterschiedliche Beabstandung der Probenkammer 3 zur Wandung 2 zu einer Verdichtung des Materials genutzt werden kann, ohne daß dieses radial aus der Probenkammer 3 bzw. dem Probenhohlraum austritt.

Abweichend von den dargestellten Ausführungsbeispielen kann vorgesehen sein, die Verdichtung der zu untersuchenden Materialprobe dadurch zu erzielen, daß das Fenster 8 in den Proben-Hohlraum 4 hineinbewegt wird. Dazu kann vorgesehen sein, den optischen Leiter 7 längs zu verschieben. Auch ohne elastische Ausgestaltung der Probenkammer 3 können so vergleichbare Aussagen der Qualitätskontrolle erzielt werden.

## Patentansprüche

1. Verfahren zur Qualitätsbestimmung eines granulatförmig vorliegenden Materials mittels eines optischen Sensors,
wobei eine Materialprobe während eines in einer Prozesskammer ablaufenden Herstellungs- oder Behandlungsprozesses aus dem Prozess entnommen, in eine Probenkammer verbracht und vor ein Fenster geführt wird, durch welches der Sensor die Materialprobe erfasst,
wobei die Materialprobe während der optosensorischen Qualitätsbestimmung innerhalb der Prozesskammer verbleibt und nachher in den Prozess zurückgeführt wird,
**dadurch gekennzeichnet, dass** die Materialprobe innerhalb der Probenkammer (3) vor Durchführung der Qualitätsbestimmung verdichtet wird.

2. Verfahren nach Anspruch 1,
**dadurch gekennzeichnet, dass** die Materialprobe gegen das Fenster (8) gepresst wird.

3. Verfahren nach einem der vorhergehenden Ansprüche,
**dadurch gekennzeichnet, dass** das Fenster (8) vor Durchführung der optosensorischen Qualitätsbestimmung gereinigt wird.

4. Verfahren nach Anspruch 3,
**dadurch gekennzeichnet, dass** die Reinigung mittels eines mechanischen Wischers erfolgt.

5. Verfahren nach Anspruch 4, **dadurch gekennzeichnet, daß** die Reinigung durch elastische Wände der Probenkammer (3) erfolgt.

6. Verfahren nach Anspruch 3,
**dadurch gekennzeichnet, dass** die Reinigungdurch Anblasen des Fensters (8) mit einem Gas erfolgt.

7. Verfahren nach einem der vorhergehenden Ansprüche,
**dadurch gekennzeichnet, dass** die Probenkammer (3) zu ihrer Entleerung mit einem Gas ausgeblasen wird.

8. Verfahren nach Anspruch 6 oder 7,
**gekennzeichnet durch** die Verwendung eines prozessneutralen Gases.

9. Verfahren nach einem der vorhergehenden Ansprüche,
**dadurch gekennzeichnet, dass** die Qualitätsbestimmung durch eine Infrarot-Nahfeldmessung erfolgt.

10. Vorrichtung zur Qualitätsbestimmung eines granulatförmig vorliegenden Materials,
mit einer Prozesskammer zur Aufnahme des Materials zur Herstellung bzw. zur Behandlung dieses Materials,
und mit einer innerhalb der Prozesskammer angeordneten Probenkammer zur Aufnahme einer als Materialprobe bezeichneten, zu untersuchenden Teilmenge des Materials, und mit einem optischen Sensor, welcher durch ein Fenster auf die Probenkammer gerichtet ist,
**dadurch gekennzeichnet,**
**dass** die Probenkammer (3) und das Fenster (8) relativ zueinander beweglich sind,
derart, dass die in der Probenkammer (3) befindliche Materialprobe mittels der Relativbewegung verdichtbar und dem Fenster (8) anlegbar ist.

11. Vorrichtung nach Anspruch 10,
**dadurch gekennzeichnet, dass** die Probenkammer (3) schalenartig ausgestaltet und schwenk- oder drehbeweglich gelagert ist, derart, dass die Probenkammer (3) nach oben offen befüllbar und nach unten offen entleerbar ist.

12. Vorrichtung nach Anspruch 10 oder 11,
**dadurch gekennzeichnet, dass** die Probenkammer (3) entlang einer Wandung (2) der Prozesskammer (1) beweglich ist,
wobei in der Wandung (2) innerhalb der Bewegungsbahn der Probenkammer (3) ein Fenster (8) für den optischen Sensor vorgesehen ist.

13. Vorrichtung nach Anspruch 12,
**dadurch gekennzeichnet, dass** an der Probenkammer (3) ein Reinigungselement zur Reinigung des Fensters(8) vorgesehen ist.

14. Vorrichtung nach Anspruch 13, **gekennzeichnet durch** eine Konusfläche (10) im Bereich des Fensters (8) und eine elastische Ausbildung der Wandung der Probenkammer (3).

15. Vorrichtung nach einem der Ansprüche 10 bis 14,
**dadurch gekennzeichnet, dass** der Sensor mitsamt dem Fenster (8) in die Probenkammer (3) bewegbar ist, derart, dass die Materialprobe dem Fenster (8) anliegt.

16. Vorrichtung nach Anspruch 15,
**dadurch gekennzeichnet, dass** der Sensor um ein die Materialprobe verdichtendes Maß in die Probenkammer (3) bewegbar ist.

17. Vorrichtung nach einem der Ansprüche 10 bis 16,
**dadurch gekennzeichnet, dass** die Probenkammer (3) verformbar ist,
derart, dass ihr Innenraumvolumen verringerbar und die in der Probenkammer (3) enthaltene Materialprobe verdichtbar ist.

18. Vorrichtung nach Anspruch 17,
**dadurch gekennzeichnet, dass** die Probenkammer (3) mittels einer Führungsstange (6) gegen die Wandung (2) der Prozesskammer (1) gezogen und hierdurch verformt werden kann.

19. Vorrichtung nach einem der Ansprüche 10 bis 18,
**dadurch gekennzeichnet, dass** die Probenkammer (3) der Wandung (2) der Prozesskammer (1) anliegt,
wobei die Wandung (2) gleichzeitig die Probenkammer (3) begrenzt
und die Probenkammer (3) der Wandung (2) einen Verlust von Material der Materialprobe verhindernd dicht anliegt.

20. Vorrichtung nach den Ansprüchen 10 und 19,
**dadurch gekennzeichnet, dass** die Probenkammer (3) einen keilförmigen Proben-Hohlraum (4) schafft, welcher sich entgegen der Bewegungsrichtung der Probenkammer (3) verjüngt.

21. Vorrichtung nach Anspruch 20,
**dadurch gekennzeichnet, dass** die Probenkammer (3) in zwei gegenläufigen Bewegungsrichtungen beweglich ist.
